(19)

Europäisches
Patentamt
European
Patent Office
Office européen
des brevets

(11) EP 2 164 204 A1

(12) EUROPEAN PATENT APPLICATION

(43) Date of publication:
17.03.2010 Bulletin 2010/11

(51) Int Cl.:
H04L 12/12 (2006.01)     H04L 12/403 (2006.01)

(21) Application number: 08164332.2

(22) Date of filing: 15.09.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(71) Applicant: Telefonaktiebolaget LM Ericsson (publ)
164 83 Stockholm (SE)

(72) Inventors:
• Gustafsson, Harald
223 63 Lund (SE)
• Strandmark, Björn
241 93 Eslöv (SE)

(74) Representative: Boesen, Johnny Peder
Zacco Denmark A/S
Hans Bekkevolds Allé 7
2900 Hellerup (DK)

(54) **Energy efficient inter-subsystem communication**

(57)     Control of communication in a data communication system (300) of at least two subsystems (302, 303) is presented. Scheduling transfer of data is performed from a transmitting subsystem (302) to a receiving subsystem (303). The scheduling comprises determining at least one of a plurality of transfer conditions including a level of activity of each subsystem, a point in time when each subsystem is scheduled to be active, a time limit for receiving data, in the receiving subsystem, an amount of data the receiving subsystem need, and a maximum amount of outstanding data in transfer between said subsystem. In dependence on at least the determined transferring conditions is transferring of data from the transmitting subsystem to the receiving subsystem, the transfer being subject to a delay that depends on the determined at least one transfer condition.

Fig. 3

**Description**

**Technical field**

The present invention relates to control of communication between subsystems in a data communication system.

**Background**

Communication devices of today include a number of electronic circuits or sub-systems that often need to communicate with each other. These communications may involve transfer of data and signaling for controlling the communication. Typically, during such communication, the communicating subsystems need to be in an active state.

Transfer of data may be done by the use of shared memory on a memory bus, use of special purpose buses, as well as via serial links. The transfer may require that levels of a memory hierarchy need to be flushed into a common level between subsystems or handling by a specific control unit such as a Direct Memory Access Controller (DMAC). Moreover, transfer of data between subsystems is usually performed in a synchronous manner, which means that a receiving subsystem must be in an active state to be able to respond to a data transfer request by accepting or denying the reception of data.

Many electronic devices are battery powered and an important issue when designing such devices is that of reducing power consumption in order to improve battery lifetime. Hence, there is a need to lower the active time of subsystems. This is of some importance since the static current consumption part of the total current consumption is increasing when chip detail size is reduced, noting that chip detail size reduction is relevant at least when designing small hand held communication devices. The static current consumption of a subsystem is contributing to the total energy consumption of a chip or circuit when the subsystem is not in non-active mode. The static power consumption is independent of the load. That is, whether or not subsystems are in active or non-active mode makes a notable difference in terms of power consumption.

US 7,093,036 B2 addresses the problem of power consumption in electronic circuits. However, US 7,093,036 B2 has a drawback in that it provides solutions directed to specific problems related to service interrupt signals received by a processor from peripherals.

**Summary**

In order to improve on prior art solutions there is provided, according to a first aspect, a method in a data communication system comprising at least two subsystems. The method comprises scheduling transfer of data from a transmitting subsystem to a receiving subsystem. The scheduling comprises determining at least one of a plurality of transfer conditions including a level of activity of each subsystem, a point in time when each subsystem is scheduled to be active, a time limit for receiving data, in the receiving subsystem, an amount of data the receiving subsystem need, and a maximum amount of outstanding data in transfer between said subsystems. In dependence on at least the determined transferring conditions data is transferred from the transmitting subsystem to the receiving subsystem, the transfer being subject to a delay that depends on the determined at least one transfer condition.

In other words, the drawbacks as discussed above are addressed by providing a scheduling mechanism that is capable of scheduling data transfer that will lower the active time of communicating subsystems. This is done by delaying a transfer until it can be used or is needed by a receiving subsystem and preferably at a time when the receiving subsystem is active. This is in contrast to prior art solutions and an advantage is hence that a reduction of power consumption is achieved resulting, in the case of battery powered devices, an increased battery lifetime.

For the purpose of clarity, in the present document the expression "level of activity" is used in the widest possible scope. That is, the level denoted "active" and the level denoted "non-active" may represent any two differing activity levels known in the art. For example, the active level may include such states as "executing" and "idle" and the "non-active" level includes such states as "powered off" and "sleeping", as the skilled person will realize.

Embodiments of the method include determination of a level of activity that may comprise polling at least one of the subsystems and obtaining an indication of whether or not the subsystem is ready to participate in a transfer. The determination of a level of activity that may also comprise receiving an event from the system, the event being indicative of whether or not a subsystem is ready to participate in a transfer.

Furthermore, the determination when each subsystem is scheduled to be active may be done by reading a respective timer that is configured to activate the subsystems.

The determination of a time limit for receiving data may involve calculation of an activation time, specifying the latest point in time when the respective subsystem needs to start processing to meet a deadline. The calculation may determine the earliest point in time when the maximum transfer time between the subsystems is exceeded. That is, calculation of the activation time will further tell the scheduling mechanism when it is most optimized, from a power consumption perspective, to transfer data to meet a set deadline.

Furthermore, the determination of a time limit for receiving data may involve obtaining an already existing activation time, the activation time specifying the latest point in time when the respective subsystem needs to start processing to meet a deadline. For example, the time limit may be obtained from a client that interfaces with the scheduling.

Embodiments include those where the determination of the maximum amount of outstanding data in transfer between subsystems comprises use of information regarding a buffer, e.g. a FIFO queue, on the transmitting subsystem.

When it has been determined that the transmitting subsystem is active, the method may comprise the setting of a length that corresponds to the max number of outstanding transfers, and the transmitting subsystem activating the receiving subsystem for avoiding an overflow.

Furthermore, embodiments include those where transfer is forced before the receiving subsystem becomes non-active.

In other words, the transfer may involve the use of a buffer on the transmitting subsystem to minimize the risk of overflow and to initiate the transfers, and conditions relating to the receiving subsystem may impose limits on if, how much or when data needs to be transferred.

Other embodiments include those that comprise transfer via a third subsystem. This transfer may comprise scheduling with a memory system.

In a second aspect, there is provided an apparatus configured to control power consumption in a system of at least two subsystems, the apparatus being configured to schedule transfer of data from a transmitting subsystem to a receiving subsystem, and configured to determine at least one of a plurality of transfer conditions including a level of activity of each subsystem, a point in time when each subsystem is scheduled to be active, a time limit for receiving data, in the receiving subsystem an amount of data the receiving subsystem needs, and a maximum amount of outstanding data in transfer, and configured to, in dependence on at least the determined transferring conditions to transfer data from the transmitting subsystem to the receiving subsystem, the transfer being subject to a delay that depends on the determined at least one transfer condition.

The apparatus according to the second aspect may, according to a third aspect, be comprised in a mobile communication device, and a computer program according to a fourth aspect may comprise software instructions that, when executed in a computer, performs the method according to the first aspect. These further aspects provide corresponding effects and advantages as discussed above in connection with the first aspect.

## Brief description of the drawings

Embodiments will now be described with reference to the attached drawings, where:

    figure 1 schematically illustrates a mobile communication device,
    figure 2 schematically illustrates interaction of two subsystems and a scheduler,
    figure 3 schematically illustrates interaction of two subsystems and a scheduler,
    figure 4 schematically illustrates interaction of three subsystems and a scheduler,
    figures 5 to 10 are flow charts of data transfer scheduling.

## Detailed description of embodiments

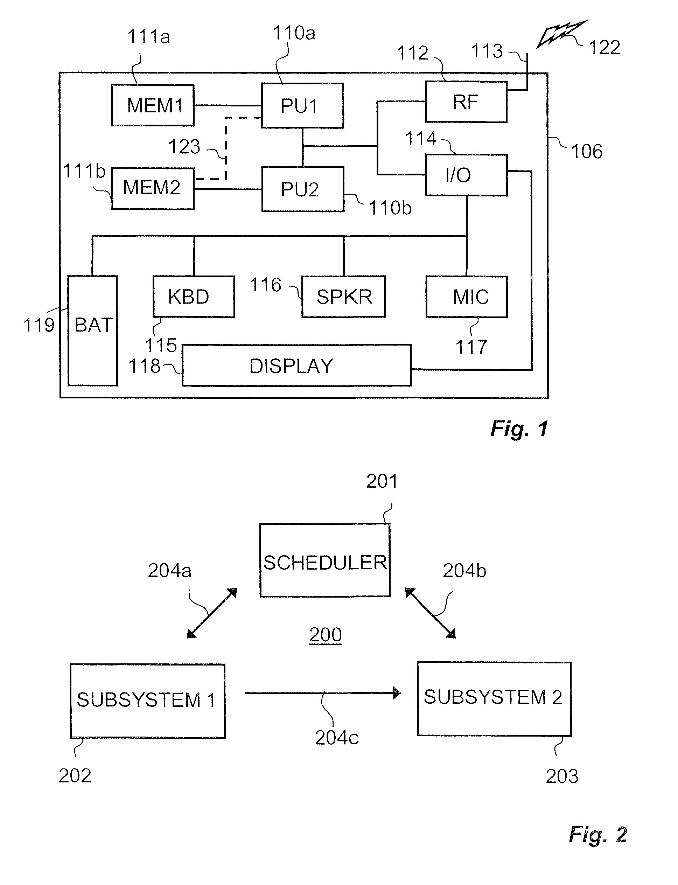

Figure 1 illustrates schematically a mobile communication device 106. The communication device 106 comprises processing units 110a, 110b connected to respective memory units 111 a, and 111b. A battery 119 as well as input/output units in the form of a microphone 117, a speaker 116, a display 118 and a keypad 115 is connected to the processing units 110a, 110b and memory units 111a, 111b via an input/output interface unit 114. Radio communication via an air interface 122 is realized by radio circuitry (RF) 112 and an antenna 113. The processing units 110a and 110b makes use of software instructions stored, e.g., in the memory units 111 a and 111 b in order to control all functions of the terminal 106, including the functions to be described in detail below with regard to control of power consumption. For example, the processing includes determination of conditions in the terminal, processing of data as well as keeping track of time, i.e. performing timing functions. Embodiments include those where, as illustrated in figure 1 by connector 123, a processing unit 110a is connected to both memory units 111 a and 111 b. The battery provides electric power to all other units that reside in the mobile communication device 106.

Details regarding how these units operate in order to perform normal functions within a mobile communication network are known to the skilled person and are therefore not discussed further. Moreover, the illustration of a mobile communication device is not to be interpreted as limiting. That is, realization of the scheduling summarized above in a mobile communication device is only one example and it is foreseen that scheduling to optimize power control is useful in any device that has processing capabilities.

Figure 2 is a functional block diagram that illustrates interactions between communicating subsystems, a first subsystem 202 and a second subsystem 203, controlled by a scheduler 201. The subsystems 202,203 of figure 2 may form part of any of the units of a mobile communication device such as the communication device 106 of figure 1. Embodiments include those where the subsystems 202,203 form part of the processing unit 110a and processing unit 110b, respectively. Although illustrated as a separate block in figure 2, the scheduler 201 may be implemented in any of or both of the subsystems 202 and 203. In fact, due to its controlling character, it is preferable that the scheduler 201 forms part of at least a processing unit and a memory unit, such as any of the processing units 110a and 110b and memory units 111a and 111b of the device in figure 1. Communication between the scheduler 201 and the subsystems 202,203 and between the subsystems 202, 203 is in figure 2 illustrated by arrows 204a-c and illustrates communication of data as well as control signals. The scheduler 201 is configured such that it schedules transfer of data, based on conditions determined about the subsystems, between the subsystems as will be described further below.

Further, figure 2 illustrates communication between the two subsystems 202,203 where the first subsystem 202 is a sending subsystem and the second subsystem 203 is a receiving subsystem. As the skilled person will realize, the subsystems 202, 203 may also have reverse roles, i.e. first subsystem 202 may also act as a receiving subsystem and the second subsystem 203 may also act as a sending subsystem.

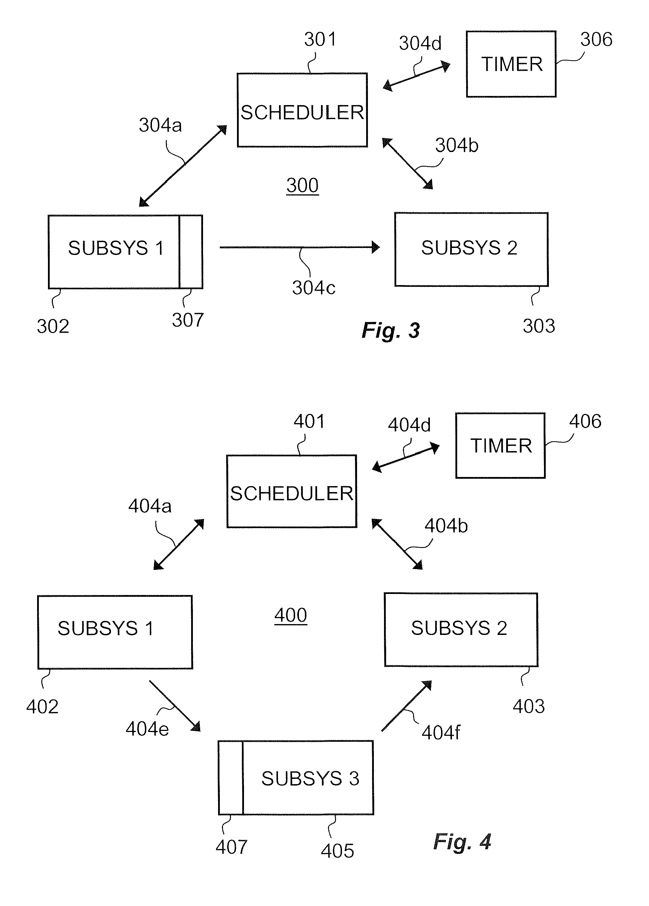

Figure 3 is a functional block diagram that illustrates interactions between communicating subsystems, a first subsystem 302 and a second subsystem 303, controlled by a scheduler 301. Similar to the systems of figure 2, the subsystems 302,303 of figure 3 may form part of any of the units of a mobile communication device such as the communication device 106 of figure 1. Embodiments include those where the subsystems 302,303 form part of the processing unit 110a and processing unit 110b, respectively. Although illustrated as a separate block in figure 3, the scheduler 301 may be implemented in any of the subsystems 302 and 303. In fact, due to its controlling character, it is preferable that the scheduler 301 forms part of at least a processing unit and a memory unit, such as any of the processing units 110a and 110b and memory units 111a and 111b of the device in figure 1. Communication between the scheduler 301 and the sub-systems 302,303 and between the subsystems 302, 303 is in figure 3 illustrated by arrows 304a-c and illustrates communication of data as well as control signals. A timer 306 is configured such that it provides timing information to the scheduler 301, as illustrated by a communication arrow 304d. The timer 306 also forms part of a mobile communication device, such as the device 106 of figure 1. Moreover, the transmitting subsystem 302 comprises a data buffer 307, e.g. realized in the form of a first in-first out, FIFO, queue. The scheduler 301 is configured such that it schedules transfer of data, based on conditions determined about the subsystems, between the subsystems as will be described further below.

Figure 4 is a functional block diagram that illustrates interactions between communicating subsystems, a first subsystem 402 and a second subsystem 403, controlled by a scheduler 401. Similar to the systems of figures 2 and 3, the subsystems 402,403 of figure 4 may form part of any of the units of a mobile communication device such as the communication device 106 of figure 1. Embodiments include those where the subsystems 402,403 form part of the processing unit 110a and processing unit 110b, respectively. Although illustrated as a separate block in figure 4, the scheduler 401 may be implemented in any of the subsystems 402, 403 and 405. In fact, due to its controlling character, it is preferable that the scheduler 401 forms part of at least a processing unit and a memory unit, such as any of the processing units 110a and 110b and memory units 111 a and 111 b of the device in figure 1. Communication between the scheduler 401 and the subsystems 402,403 is in figure 4 illustrated by arrows 404a and 404b and illustrates communication of control signals. A timer 406 is configured such that it provides timing information to the scheduler 401, as illustrated by a communication arrow 404d. The timer 406 also forms part of a mobile communication device, such as the device 106 of figure 1. Further, figure 4 illustrates the communication between the two subsystems 402,403 similar to the situation illustrated in figures 2 and 3, but with use of a third subsystem 405. That is, here the first and the second subsystem 402,403 share a communication subsystem, the subsystem being the third subsystem 405. Such a third subsystem may be realized in a memory unit such as any of the memory units 111a and 111b of the device in figure 1. Moreover, the third subsystem 405 comprises a data buffer 407, e.g. realized in the form of a first in-first out, FIFO, queue. Here also, the scheduler 401 is configured such that it schedules transfer of data, based on conditions determined about the subsystems, between the subsystems as will be described further below.

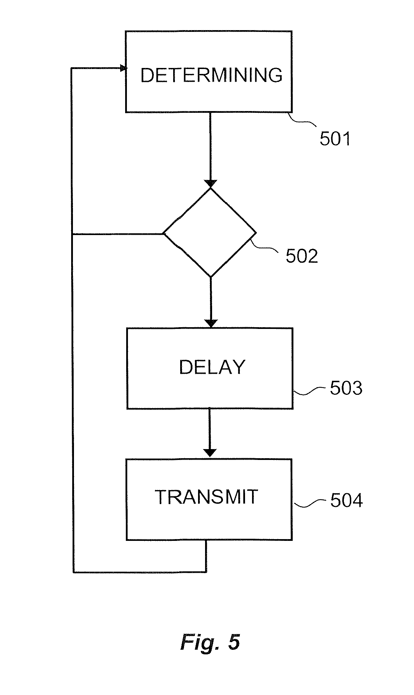

Turning now to figure 5, a flow chart is presented that illustrates a method of controlling power consumption in a system of at least two subsystems, involving scheduling transfer of data from a transmitting subsystem to a receiving subsystem, e.g. the subsystems 202,203,302,303,402,403 and 405 being controlled by a scheduler such as the scheduler 201,301,401 described above in connection with figures 2, 3 and 4.

In a first determination step 501, at least one among a plurality of transfer conditions is determined. A first transfer condition is that of a respective level of activity of each subsystem and a second condition is that of when each subsystem is scheduled to be active. A third transfer condition is that of a time limit for receiving data in the receiving subsystem. Fourth and fifth transfer conditions are those of an amount of data that the receiving subsystem needs and a maximum amount of outstanding data in transfer. It should be obvious for a person skilled in the art that the determination of these transfer conditions are not limited to be done in the above mentioned order.

These transfer conditions are then checked in a checking step 502 and, depending on the determinations that were made during the determination step 501, a transfer of data from the transmitting subsystem to the receiving subsystem is then performed in a transmission step 504 after potentially being delayed in a delay step 503.

Determining 501 the level of activity in the subsystems may be done by determining whether or not the subsystems are active as well as by polling the subsystems and receiving a response that indicates whether or not the subsystems are active or non-active. Furthermore, by reading a timer, such as the timer 306 in figure 3 and timer 406 in figure 4, it is possible to determine when each subsystem is scheduled to be active. Other ways in which to determine when each subsystem is scheduled to be active may be to receive an event with information on activity level changes or by polling any of the subsystems.

The determination of a time limit may involve calculation of an activation time that specifies a latest point in time when the respective subsystem needs to start a process to meet a deadline. This start of processing deadline is based on dependencies towards data being transferred. The activation time may specify an earliest point in time when a maximum transfer time between the subsystems is exceeded.

In order to determine the maximum amount of outstanding data in transfer between subsystems, information regarding a buffer, such as a FIFO queue, on the transmitting or the receiving subsystem may be used. Such information may contain details of maximum amount of bytes, logical units (e.g. frames) or data durations.

To assure that the transfer is fully transmitted, the transfer may be forced before the receiving subsystems goes into a non-active level.

By use of a third subsystem as illustrated in figure 4 it is possible for the receiving subsystem to obtain the transferred data without requiring that the transmitting subsystem is active. However, in such a situation there is a need for a mechanism to inform the receiving subsystem that the transmitting subsystem has buffered data. Moreover, in such a scenario there is no need to schedule the active time of the two subsystems to have periods when both are active simultaneously. The scheduler will however still need to be able to delay the activation of the receiving system until it is possible to process the transferred data or until transfer latency is reached or until there is a risk that the receiving data misses its deadline.

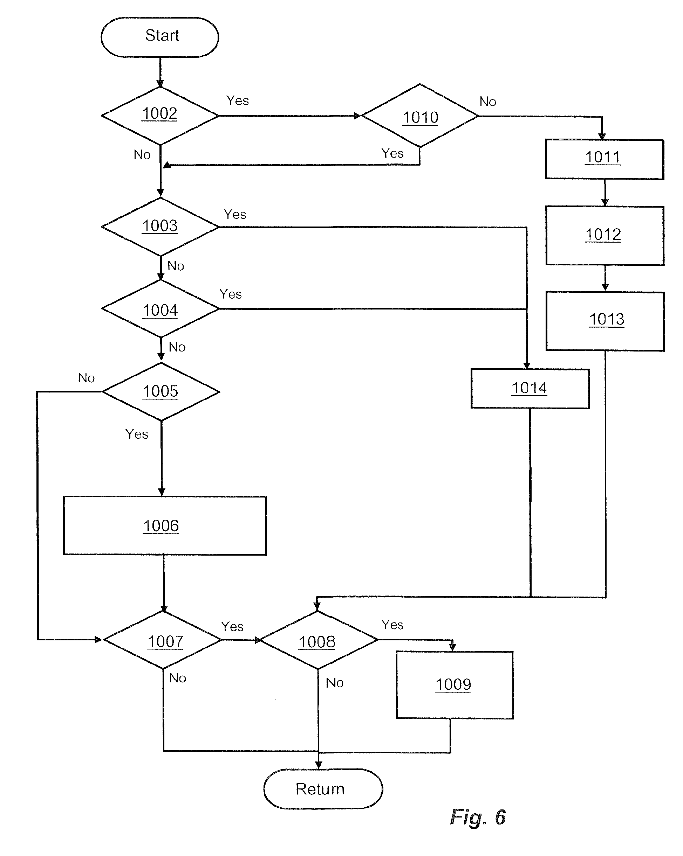

Turning now to figures 6 to 10, scheduling between subsystems will be described in some more detail. Here a terminology will be used that denotes a subsystem that is to provide data, i.e. corresponding to a transmitting subsystem as described above, a producing subsystem (PSS). Conversely, a subsystem that is to receive data, i.e. corresponding to a receiving subsystem as described above, will be denoted consuming subsystem (CSS). The reason for this choice of terminology is to stress the fact that a subsystem may act as a transmitting/producing as well as a receiving/consuming subsystem in the case of a two-way transfer.

A central concept is that of delay of transfer of data. The delay is constrained by scheduled activation of the participating subsystems. The scheduled activation is decided based on deadlines for acting on and transferring the data entered into a buffer. At subsystem activation transfers will be performed. Activations are decided per subsystem. In cases where a third subsystem is used for the transfer, the activations of the producing and consuming subsystems may be independent of each other. When a direct transfer between subsystems is used, the activations of the subsystems must be synchronized. Moreover, deadlines are decided per buffer.

A subsystem may have a forced or normal scheduled activation. Forced activations are created by the transfer scheduler, e.g. the schedulers 201, 301, 401 discussed above, to meet transfer deadlines. Normal scheduled activations are created by other schedulers or timers such as a process scheduler, a process on the subsystem setting a sleep time, a periodic tick and timer etc. The transfer scheduler may beneficially select, if possible, to use normal scheduled activation for its transfer scheduling to reduce the number of activations of the subsystems.

Now with reference to the flow chart in figure 6, when the subsystem(s) is/are active, as checked in a checking step 1002, at a scheduling of a transfer, the transfer can be performed directly. As will be described further below, a subsystem will have a de-activation delay when active but requested to de-activate. Optionally during de-activation delay, as checked in a checking step 1010, no transfers are performed. This has the benefit of preventing a transmitter which enters data into the buffer at a slow pace to keep the receiver in active level by aborting the de-activate delay repeatedly. When decided to transmit, all data on this subsystem are transmitted as illustrated by a transmission step 1011. The buffers will now be depleted and hence any now obsolete forced activation can be removed in a removal step 1012. Here, data deadline logging to activations is not needed since all forced activation for buffers that are depleted are removed. Also the de-activation delay is set to a duration delta as illustrated by a setting step 1013. The value on delta may vary between subsystems and over time.

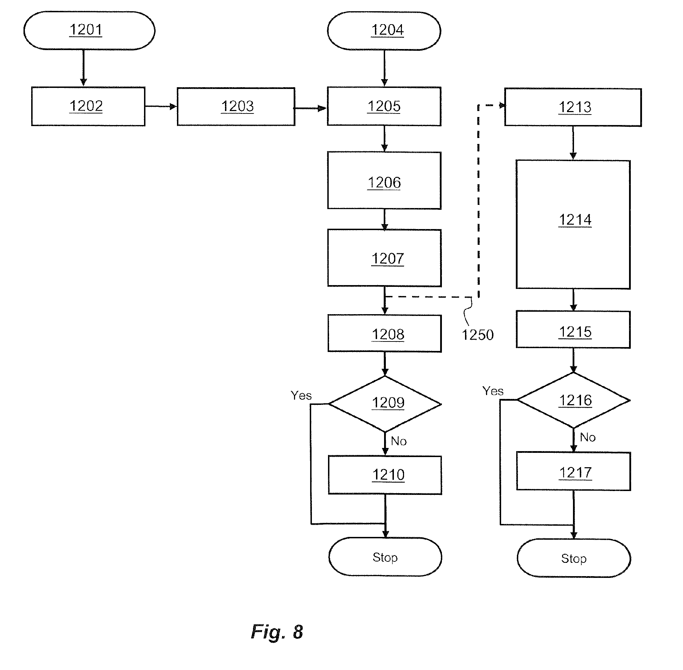

When the subsystem(s) is/are non-active, as checked in the checking step 1002, two scheduling policies can activate the subsystem needed to complete a transfer, i.e. either only the receiving subsystem or both subsystems. This activation will be an activation that is not previously scheduled, or for short, an un-scheduled activation although the scheduler activates the subsystem. The first policy, as determined in a checking step 1003, is a firm maximum outstanding amount of data, which can be based on amount of logical units, duration or number of bytes. When that maximum is reached the necessary subsystems are activated, as illustrated by an activation step 1014. This is equivalent to a maximum transfer latency tolerated. Further details on what takes place at an activation of a subsystem will be discussed below in connection with figure 8.

The optional scheduling policy, as determined in a checking step 1004, is to consider a minimum useful amount of data that is useful for the receiver. This is derived from a minimum latency that is needed and what quanta data is consumed in. For example, if a consumer always needs four logical data units to be able to start operate it will have a quanta of four. Equal reasoning can be made for quanta measured in bytes and duration. The quanta level is calculated by adding the transferred but unconsumed data modulo quanta and the pending transfers.

When the quanta level is at or above the quanta and the minimum amount of pending transfers are above the minimum useful level the necessary subsystems are activated 1014. In other words, transmission takes place when the following expression is true, as determined in the checking step 1004:

$$modulo(transferred\ but\ unconsumed\ data,\ data\ quanta) + pending\ transfers$$
$$AND$$
$$pending\ data\ transfers > min\_latency$$

where a modulo operation is defined as the reminder after a division, e.g.:

$$modulo(A,B)=(A/B - integer(A/B))*B$$

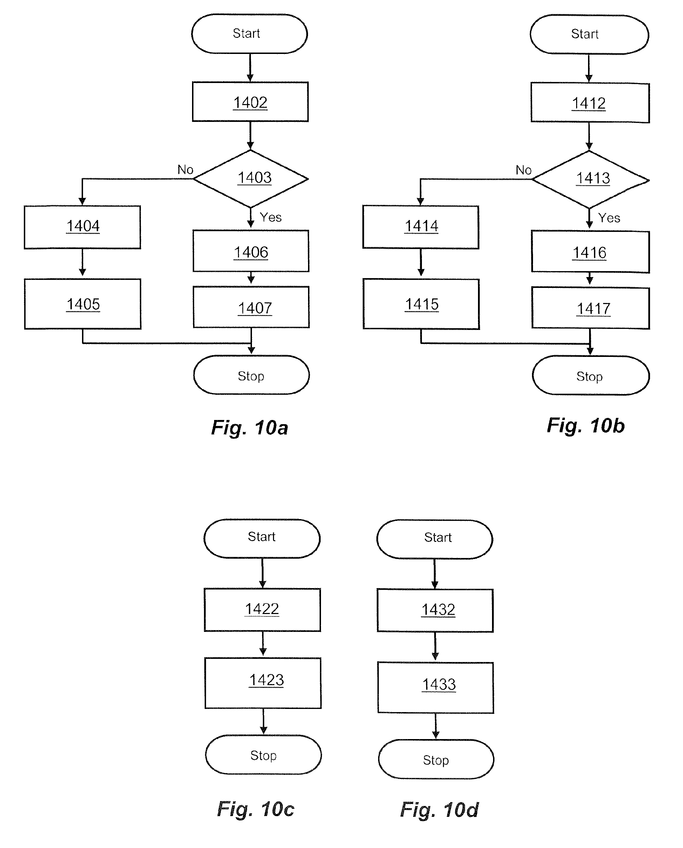

The consumer or producer of the transfers can set a deadline as will be described in more detail below in connection with figure 10. When it choose not to and when a two way communication is set up, as determined in a checking step 1005, between the consumer and producer, a deadline may be calculated inside the transfer scheduler when required, as illustrated by a calculation step 1006. This is useful when one of the subsystems creates deadlines and the other does not. As an example embodiment of two-way communication is a producer that transfers data to a consumer that have a pseudo-periodic deadline/activation pattern and the consumer asynchronously returns acknowledgement that it has finished reading the data. A further example is that the buffer used for the transfers is bounded and can not be filled further without reception of read acknowledgement. The deadline (for the producer in this example) can then be calculated in step 1006 based on when it needs to receive the acknowledgements to be able to fulfill the data transfer on time for the consumer deadline. It is to be noted that for acknowledgments, the producer and consumer are receiver and transmitter, respectively. The deadline is calculated based on consumer activation before consumer deadline, any estimated producer processing time and any estimated transfer time. An example formula for the deadline is:

$$PSS\_deadline=CSS\_activation-max(processing\ time)-max(transfer\ time)$$

This would give, to the producing subsystem, a worst case estimated deadline scheduling of the transfer. Alternatives are to use average, median or other statistical methods to derive a deadline. Such alternatives are scheduling policies which can be chosen based on quality of service versus energy minimization relative importance and can vary over time and buffer. This calculated deadline can now be used as above to derive the activation using a forced activation due to that this subsystem does not have any normal activations. The benefit of a synchronized scheduling of a two-way transfer is that it may reduce the number of activations for a subsystem and hence reduce the energy consumption.

An example with the opposite subsystem (i.e. producer) having normal activations can be made, as the skilled person will realize.

When it is decided to schedule a transfer based on a deadline for the data, as determined in decision step 1007, the following actions are taken. When any normal or forced activation exist before the deadline the scheduler has verified that the transfer will be performed before the deadline without further actions, as illustrated by a decision step 1008. When the transfer scheduler fails to find an existing activation before the deadline it creates a forced activation at the deadline, as illustrated by an activation step 1009. The scheduler may in both cases log that it has scheduled a transfer on an activation to facilitate simpler removal of obsolete forced activations at a later step. When such logging is used the scheduler prefers to log the transfer on a normal instead of forced activation when several exist before a deadline. This is beneficial since any forced activations may be removed if not used at a later re-scheduling. Still it is always beneficial to log which activation are forced and which are normal, to be able to remove the forced ones. The scheduler prefers to use normal activation since that reduces the number of times the subsystem is activated and hence reduces energy consumption.

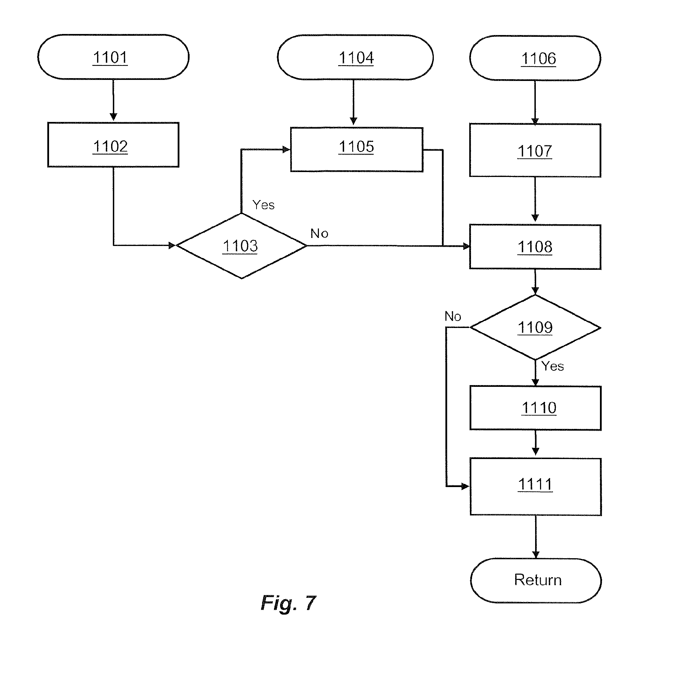

Turning now to figure 7, entries for a scheduling will be described in detail. The entries are the client interfaces for using the scheduler and here it is described when a scheduling is done. For example, the client may be a subsystem participating in a transfer, as well as an external client that does not take part in the actual transfer.

Three activities, as illustrated by starting points 1101, 1104 and 1106, may lead to a scheduling: new data is entered into the buffer 1101, a deadline is set for data 1104 and an activation time is set for a subsystem 1106. When new data is entered it is put into a buffer in a buffering step 1102. If also a consumer deadline is supplied, as checked in a checking step 1103, then that is stored, in a storage step 1105, for the data. This is used by the producer client when it needs to transfer data. The deadline supplied for the data can be used when the producer has information on consumer deadlines.

Alternatively a deadline is altered for present data in the buffer, data that earlier did not have a deadline or for the buffer that is applied to any new data entered, as illustrated by starting point 1104. The new deadline is stored for the data in storage step 1105. This is mainly used by the consumer client to inform the scheduler of deadlines on data (to be) entered in the buffer by the producer client.

A further alternative is for the client to inform the scheduler of normal activations by storing the activation time, as illustrated by the starting point 1106 and storage step 1107. This can be used by the transfer scheduler to coordinate its transfers with activity on the subsystem. As described above, this can be initiated by for example polling or event based methods.

All these entry points 1101, 1104, 1106 lead to that all buffers due for transfer to the subsystem are (re-) scheduled in a scheduling call 1108 by using the scheduling methods described above in connection with figure 6. Hence, this is not just a single call to the schedule transfers flow chart (figure 6), but multiple.

Likewise when a subsystem has both receivers and transmitters, as checked in a checking step 1109, also all subsystems that receive buffers from this subsystem is (re-) scheduled in a step 1110 where a call to scheduling according to figure 6 is performed. This is beneficial since transfer deadlines to other subsystems are dependent on transfer deadlines to this subsystem and future activations of this subsystem.

In cases when a client calls many entry-points during a short time-period, e.g. entry point 1106 followed by entry point 1104 or several data is entered in the same buffer, it is possible to hold off scheduling until the last entry to avoid duplicate scheduling. This can be accomplished by using for example a defer-and-commit mechanism. This is not shown in figure 7.

After the scheduling some obsolete forced activations may exist. When transfers are logged on activations during the scheduling any forced activations that don't have any transfers are removed. When logging is not used, each forced activation is made obsolete if any earlier activation exists or if no deadlines exist before the activation, as illustrated by step 1111.

Uses of the entries are shown in the client use case examples described below in connection with figure 10. As the skilled person will realize, other clients may also use these entries, e.g. service loops or period ticks that work based on either polling or event mechanisms.

Above is described how a transfer scheduling is performed and when a transfer scheduling is performed. Now with reference to figure 8, it will be described how a scheduled transfer is performed and how un-scheduled activations of subsystems are used to handle transfers.

When the activation time for a scheduled transfer is reached, as illustrated by an entry point 1201, the scheduler activates the subsystem in an activation step 1202. Also when any subsystem that is involved in the buffer that shall be transferred is in a de-activation delay, this deactivation delay is aborted in an abortion step 1203.

An alternative to the scheduled transfer, i.e. entry point 1201, is when a subsystem is activated for other reasons as illustrated by an entry point 1204, e.g. to handle a maximum amount of outstanding data and not previously known events activating the subsystem as discussed above in connection with figure 6. Next is to transfer, in a transfer step 1205, all data in the buffers to this subsystem. Hence all buffers are depleted and any forced activations can be removed in a removal step 1206.

The transfer scheduler has finished its transfers and requests the subsystem to de-activate. This is done by first setting the de-activation delay to a duration delta in a setting step 1207. The value on delta may vary between subsystems and over time. The delay is used to allow other activities on the subsystem to abort a de-activation, in an abortion step 1213, if they are not finished, as illustrated by a dashed flow indication line 1250. Such activities are for example processing 1214 of the transferred data. Next the delay is executed, in a delay step 1208, while the subsystem is kept in the active level, although an alternative embodiment may have three activation levels and the third activity level is entered during the delay. Such third activation level can be idle which is still active but uses less energy since it executes slower and have less activities. When the delay is not aborted, as checked in a checking step 1209, the subsystem is de-activated in a deactivation step 1210.

In the case of an aborted de-activation 1213, that activity or process scheduler will make sure to deactivate the subsystem when it has finished processing 1214, as illustrated by corresponding delay step 1215, checking step 1216 and deactivation step 1217.

Not shown in figure 8 are more advanced considerations of de-activation that can be integrated in the de-activation process shown in figure 8. Such de-activation process may consider taking into account estimated energy cost and duration of an active/non-active/active cycle. For example when the duration of such cycle is longer than the duration until the next scheduled activation, the subsystem may be kept in the active level. When more levels of activity exist, a deactivation-activation cycle is chosen that can be performed within the specified duration, e.g. executing-idle-executing. Also such activity level cycle may imply an additional energy cost to recover a sub-systems state, e.g. to fill up a (cold) cache that was cleared out to memory when de-activating.

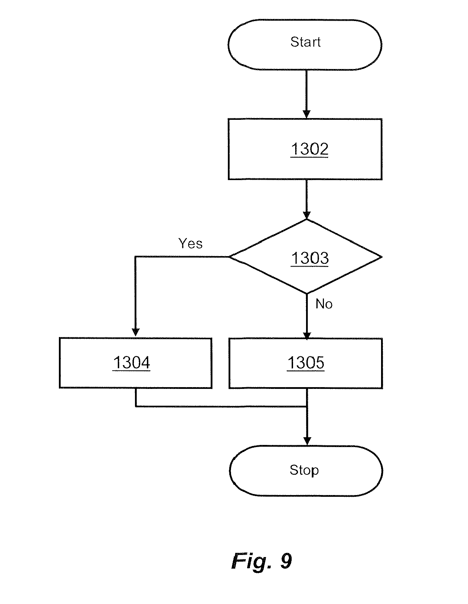

So far it has been described how a transfer scheduling is performed, when a transfer scheduling is performed as well as when and how a transfer is performed. Now, with reference to figure 9, it will be described how the delay between scheduling and transfer is accomplished.

One of the purposes with the transfer scheduler is to make it possible to de-activate the subsystems. The flow chart in figure 9 shows what happens during the non-active part of a subsystem. A delay is set, in a setting step 1302, either in the timer or in the scheduler or by other means. Here a delay means a time period that ends at a certain time point, and not duration from any time-point. From what is known at the time the subsystem is de-activated it is not scheduled to activate before the delay has passed. As seen above, also the scheduler may abort the delay to make a transfer at times not based on a deadline but other criteria such as max outstanding data. Another example of abortion of the delay, i.e. by activating the system, is reception of events or interrupts. When the delay is aborted, the "subsystem activated" activity is performed as illustrated by a checking step 1303 where it is checked whether or not the subsystem is activated and the delay is to be aborted, and in an activity step 1304 where a "call" to entry point 1204 (figure 8) is performed. When the delay is run to the scheduled time-point, the "subsystem scheduled deadline reached" activity is performed as illustrated by an activity step 1305 where a "call" to entry point 1201 (figure 8) is performed.

Turning now to figures 10a-d, examples of client uses of the transfer scheduler will be described in some more detail. In these examples the consuming subsystem and the producing subsystem are working in a two-way transfer, i.e. the consumer also writes and schedules return data. The consumer and producer are expected to execute on separate subsystems with one buffer for transfers in each direction between them. Still it is one transfer scheduler that schedules both transfer directions.

Figure 10a is a flow chart of a situation where the consuming subsystem activates the transfer of data. Figure 10b is a flow chart of a situation where the producing subsystem activates the transfer of data. Figures 10a and 10b illustrate the situations where either the consumer or producer is a subsystem that process at a deadline and not only when activated. The deadlines are added to the transfer schedulers potential transfer times.

The consuming subsystem reads data when activated and either directly consumes the data and schedule the return data transfer or at the deadline time. That is, referring to figure 10a, in a read data step 1402, the consuming subsystem reads data. In a checking step 1403, the consuming subsystem checks whether or not there are any consumer originated deadlines. If not, the consuming subsystem consumes the data in a consuming step 1404 and places any return data in the buffer in a buffering step 1405. If there are any consumer originated deadlines, the deadline times are added to the activation time for the subsystem in an addition step 1406 and the deadline is set for the next data, in a deadline setting step 1407.

The producing subsystem is activated but can only execute if the buffer is not already full. The producer then either produces data directly and schedules the data transfer or produces data at the deadline time. That is, referring to figure 10b, if the buffer is not full, as checked in a checking step 1412 then, in a checking step 1413, the producing subsystem checks whether or not there are any producer originated deadlines. If not, the producing subsystem produces data in a production step 1414 and places the produced data in the buffer in a buffering step 1415. If there are any producer originated deadlines, the deadline times are added to the activation time for the subsystem in an addition step 1416 and the deadline is set for the next data, in a deadline setting step 1417.

When processing at deadlines, as illustrated by the flow chart in figure 10c for the consuming subsystem and in figure 10d for the producing subsystem, the processing takes place at the deadlines set as illustrated in the flow charts in figures 10a and 10b. That is, the consuming subsystem consumes data in a process consume step 1422 and puts any return data into the buffer in a buffering step 1423. Correspondingly, the producing subsystem produces data in a process produce step 1432 and puts any forward data into the buffer in a buffering step 1433.

## Claims

**1.** A method in a data communication system (200,300) comprising at least two subsystems (202,203,302,303,305), the method comprising scheduling transfer of data from a transmitting subsystem (202,302) to a receiving subsystem (203,303), the scheduling comprising:

determining (501) at least one of a plurality of transfer conditions; including:

- a level of activity of each subsystem,
- a point in time when each subsystem is scheduled to be active,
- a time limit for receiving data, in the receiving subsystem
- an amount of data the receiving subsystem needs, and
- a maximum amount of outstanding data in transfer, and

in dependence on at least the determined transferring conditions:

transfer (504) data from the transmitting subsystem to the receiving subsystem, the transfer being subject to a delay (503) that depends on the determined at least one transfer condition.

2. The method according to claim 1, wherein the determination of a level of activity comprises:

polling at least one of the subsystems and obtain an indication of whether or not the subsystem is ready to participate in a transfer.

3. The method according to claim 1 or 2, wherein the determination of a level of activity comprises:

receiving an event from the system, the event being indicative of whether or not a subsystem is ready to participate in a transfer.

4. The method according to any of claim 1 to 3, wherein the determination when each subsystem is scheduled to be active is done by reading a respective timer that is configured to activate the subsystems.

5. The method according to any of claims 1 to 4, wherein the determination of a time limit for receiving data involves calculation of an activation time, the activation time specifying the latest point in time when the respective subsystem needs to start processing to meet a deadline.

6. The method according to claim 5, wherein the calculation comprises determining the earliest point in time when the maximum transfer time between the subsystems is exceeded.

7. The method according to any of claims 1 to 4, wherein the determination of a time limit for receiving data involves obtaining an already existing activation time, the activation time specifying the latest point in time when the respective subsystem needs to start processing to meet a deadline.

8. The method according to any of claim 1 to 7, wherein the determination of the maximum amount of outstanding data in transfer between subsystems comprises use of information regarding a buffer on the transmitting subsystem.

9. The method according to any of claims 1 to 8, wherein it has been determined that the transmitting subsystem is active, comprising:

- setting a length that corresponds to the max number of outstanding transfers,
- the transmitting subsystem activating the receiving subsystem for avoiding an overflow.

10. The method according to any of claims 1 to 9, wherein the transfer is forced before the receiving subsystems becomes non-active.

11. The method according to claim 1, comprising transfer via a third subsystem (305).

12. The method according to claim 11, comprising transfer via a memory system (305).

13. An apparatus (201,301) configured to control power consumption in a system (200,300) of at least two subsystems (202,203,302,303,305), the apparatus being configured to schedule transfer of data from a transmitting subsystem (202,302) to a receiving subsystem (203,303), and configured to:

determine at least one of a plurality of transfer conditions; including:

- a level of activity of each subsystem,
- a point in time when each subsystem is scheduled to be active,
- a time limit for receiving data, in the receiving subsystem
- an amount of data the receiving subsystem needs, and
- a maximum amount of outstanding data in transfer, and

configured to, in dependence on at least the determined transferring conditions:

transfer data from the transmitting subsystem to the receiving subsystem, the transfer being subject to a delay that depends on the determined at least one transfer condition.

14. A mobile communication device (106) comprising the apparatus of claim 13.

15. A computer program comprising software instructions that, when executed in a computer, performs the method of any of claims 1 to 12.

*Fig. 1*

*Fig. 2*

**Fig. 3**

**Fig. 4**

*Fig. 5*

Fig. 6

*Fig. 7*

Fig. 8

Fig. 9

**Fig. 10a**

**Fig. 10b**

**Fig. 10c**

**Fig. 10d**

Europäisches
Patentamt

European
Patent Office

Office européen
des brevets

# EUROPEAN SEARCH REPORT

Application Number

EP 08 16 4332

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 6 959 327 B1 (VOGL NORBERT GEORGE [US] ET AL) 25 October 2005 (2005-10-25)<br>* claims 1,11,12,23; figures 1A,1B,11,8,6-1 *<br>* column 5, line 4 - line 8 *<br>* column 5, line 21 - line 25 *<br>* column 5, line 34 - line 39 *<br>* column 11, line 9 - line 12 *<br>* column 17, line 40 - line 46 *<br>* column 20, line 3 - line 5 *<br>* column 27, line 25 - line 29 *<br>* column 27, line 50 - line 55 *<br>* column 31, line 2 - line 3 *<br>* column 32, line 34 - line 41 *<br>* column 37, line 45 - line 48 *<br>* abstract *<br>----- | 1-3,5-8, 11-15<br>4,9,10 | INV.<br>H04L12/12<br>H04L12/403 |
| Y | EP 1 587 242 A (SONY COMP ENTERTAINMENT INC [JP]) 19 October 2005 (2005-10-19)<br>* abstract *<br>* paragraph [0034] *<br>* paragraph [0053] *<br>* paragraph [0065] *<br>----- | 4,9,10 | |

| TECHNICAL FIELDS SEARCHED (IPC) |
|---|
| H04L<br>H04W<br>G06F<br>H04Q<br>H04B |

The present search report has been drawn up for all claims

| Place of search | Date of completion of the search | Examiner |
|---|---|---|
| Munich | 10 November 2008 | Camba, Sonia |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT**
**ON EUROPEAN PATENT APPLICATION NO.**                                    EP 08 16 4332

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2008

| Patent document cited in search report | | Publication date | Patent family member(s) | | Publication date |
|---|---|---|---|---|---|
| US 6959327 | B1 | 25-10-2005 | NONE | | |
| EP 1587242 | A | 19-10-2005 | CN | 1684462 A | 19-10-2005 |
| | | | JP | 2005328515 A | 24-11-2005 |
| | | | KR | 20060045793 A | 17-05-2006 |
| | | | US | 2005233704 A1 | 20-10-2005 |
| | | | US | 2005233789 A1 | 20-10-2005 |

EPO FORM P0459

For more details about this annex : see Official Journal of the European Patent Office, No. 12/82

**EP 2 164 204 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7093036 B2